# EUROPEAN PATENT APPLICATION

(11) **EP 2 728 900 A1**
(43) Date of publication of application: **07.05.2014**
(21) Application number: 12783074.3
(22) Date of filing: 18.04.2012
(51) Int. Cl.: H04R 1/10

(54) **INPUT DEVICE**

(30) Priority: 11.07.2011 JP 2011152935
(71) Applicant: NTT Docomo, Inc., Tokyo 100-6150 (JP)
(72) Inventor: MANABE Hiroyuki, Tokyo 100-6150 (JP); FUKUMOTO Masaaki, Tokyo 100-6150 (JP)
(74) Representative: Beder, Jens
(86) International application number: PCT/JP2012/060460
(87) International publication number: WO 2013/008504

(57) **Abstract**

Provided is an input device that allows input with a headphone using any headphone and that can be readily implemented. An input device 10 is connected to a headphone 20 including a speaker unit 21. The input device 10 includes: a tap detection unit 11 detecting an electrical signal output from the speaker unit 21 thereby to detect vibration of the headphone 20 that is caused by the user tapping from the detected electrical signal on the basis of a preset vibration detection parameter; and an input information determination unit 12 determining information to be input in accordance with the tapping detected by the tap detection unit 11.

## Description

### Technical Field

The present invention relates to an input device connected to a headphone.

### Background Art

A conventional headphone is an output device that simply outputs sound. It is noted that the headphone here generally refers to apparatuses including an earphone, a stereophone, a headset, or the like for outputting sound with a speaker attached to the ears. Therefore, in order to operate a music player, the user has to use an input device such as a remote controller or to use an input device mounted on the music player main unit. When compared with a remote controller or a music player main unit, a headphone is located at a position that is quickly accessed by the user. Therefore, if input operation can be performed with a headphone, quicker operation becomes possible.

A variety of methods for performing input operation with a headphone have been contemplated. A method of making input using a switch added to a headphone is often used because it is simple and low-cost. Some methods use a touch sensor for reducing the force to input (for example, see Non-Patent Literature 1). Voice input is possible by using a headphone with a microphone, which is generally called a headset or an earphone microphone. In many cases, the microphone is arranged in proximity to the mouth. However, some systems detect voice leaking from the external auditory meatus with a microphone mounted in the inside of a headphone (for example, see Patent Literatures 1 and 2), or detect bone conduction sound with a microphone installed where the headphone is in contact with the skin.

In other systems, input operation is performed through a gesture of the head with a motion sensor installed in a headphone, or a music player is operated using attachment/removal of a headphone to/from the ears as a trigger. According to other known systems, a movement of the external auditory meatus is detected by a distance sensor mounted in the inside of a headphone and is used as input operation (for example, see Non-Patent Literature 2), or an electro-oculogram (EOG) is detected by an electrode mounted on a headphone so that input is made with a movement of the eyeballs (for example, see Non-Patent Literature 3).

There exists a system in which input operation is performed by tapping a headphone. An acceleration sensor is provided in the headphone to detect that the headphone is tapped, which is assumed as input operation.

A method of performing full-duplex communication for output and input of sound only using a speaker of a headphone is also contemplated (for example, see Patent Literatures 3 and 4). This technique can be used to allow the user to input a command with voice.

### Citation List

### Patent Literatures

Patent Literature 1: Japanese Patent Application Laid-Open Publication No. 2007-201887
Patent Literature 2: Japanese Patent Application Laid-Open Publication No. 2006-173930
Patent Literature 3: Japanese Patent Application Laid-Open Publication No. 2011-23848
Patent Literature 4: Japanese Patent Application Laid-Open Publication No. 2005-109845

### Non Patent Literatures

Non Patent Literature 1: Buil, V, Hollemans, G., Wijdeven, S., Headphones with touch control. Proc. MobileHCI '05, 2005, pp. 377-378
Non Patent Literature 2: Taniguchi, et al., Me-Me switch: A Wearable Input Device Using Movement of Ears, Interaction 2010 Proceedings, 2010
Non Patent Literature 3: Manabe, H., Fukumoto, M., Full-time wearable headphone-type gaze detector, Extended abstracts of CHI'06, 2006, pp. 1073-1078

### Summary of Invention

### Technical Problem

Now, choices of headphones strongly reflect users' preference, and the users thus may keep using their favorable headphones. Therefore, it is important to implement an input function available with any headphone.

However, the methods described above enable input operation using a headphone but require an additional special sensor and the like for that purpose. Therefore, the user has to use a special headphone having a sensor for performing input operation for performing input operation and is unable to use the headphone that the user already owns.

The full-duplex communication only using a speaker requires the use of a special headphone that allows full-duplex communication, thereby forcing the user to use the special headphone. To perform full-duplex communication using any given headphone, sophisticated echo-cancel and noise-cancel functions are required, which makes circuitry complicated and increases power consumption.

The present invention is made in view of the problem above and aims to provide an input device that allows input with a headphone using any headphone and that can be readily implemented.

### Solution to Problem

To achieve the object above, an input device according to an embodiment of the present invention is connectable to a headphone including a speaker unit. The input device includes vibration detection means for detecting an electrical signal output from the speaker unit thereby to detect vibration of the headphone from the detected electrical signal on the basis of a preset vibration detection parameter, and input information determination means for determining information to be input in accordance with the vibration detected by the vibration detection means.

A speaker, which is generally used as a transducer for converting an electrical signal into vibration, can be used to convert vibration into an electrical signal in reverse. Then, in the input device according to an embodiment of the present invention, vibration of the headphone is detected by detecting an electrical signal output from the speaker unit included in the headphone. Then, information to be input is determined in accordance with the detected vibration. In other words, the user vibrates (taps) the headphone whereby information such as an input command to audio equipment connected with the headphone can be input.

According to an embodiment of the present invention, input with a headphone is implemented using the speaker unit included in the headphone. Therefore, input with a headphone becomes possible using any headphone. In addition, it can be readily implemented because it is only necessary to detect an electrical signal output due to vibration.

The vibration detection means may include a resistor provided between a headphone amplifier for outputting a sound signal to the headphone and the headphone, and may detect vibration of the headphone by detecting a potential change of the resistor. With this configuration, it is only necessary to detect a potential change of the resistor due to vibration, so that the present invention can be embodied reliably and more readily.

The vibration detection means may detect a potential change of the resistor on the basis of a potential obtained by amplifying a difference between a potential obtained by dividing a potential at the headphone amplifier side of the resistor and a potential at the headphone side of the resistor. With this configuration, it is only necessary to detect the potential change of the resistor due to vibration, so that the present invention can be embodied appropriately and reliably.

The vibration detection means may shift a phase of one of a potential obtained by dividing the potential at the headphone amplifier side of the resistor and the potential at the headphone side of the resistor. With this configuration, the effect of a sound signal input from the headphone amplifier to the headphone on the differentially amplified potential can be reduced, thereby appropriately detecting a potential change of the resistor due to vibration.

The input device may further include division ratio adjustment means for adjusting a division ratio pertaining to division of the potential at the headphone amplifier side in accordance with a headphone connected. With this configuration, a potential change of the resistor due to vibration can be easily detected in accordance with a headphone. Accordingly, more robust input with a headphone becomes possible.

The input device may further include signal generation means for generating an impulse signal or a sinusoidal signal with variable frequency, the signals being input from the headphone amplifier side of the resistor to the headphone through the resistor. The division ratio adjustment means may detect a response from the headphone to the impulse signal or the sinusoidal signal generated by the signal generation means and adjust the division ratio in accordance with the response. With this configuration, a potential change of the resistor due to vibration can be detected more easily in accordance with a headphone. Accordingly, more appropriate input with a headphone becomes possible.

The input device may further include signal generation means for generating an impulse signal or a sinusoidal signal with variable frequency, the signals being input from the headphone amplifier side of the resistor to the headphone through the resistor. The vibration detection means may detect a response from the headphone to the impulse signal or the sinusoidal signal generated by the signal generation means and set the vibration detection parameter in accordance with the response. With this configuration, vibration can be detected more easily from the detected potential change in accordance with a headphone. Accordingly, even more appropriate input with a headphone becomes possible.

The vibration detection means may set the vibration detection parameter by detecting an electrical signal output from the speaker unit, as calibration. With this configuration, the user vibrates (taps) the headphone to carry out calibration, so that a potential change of the resistor due to vibration can be easily detected for every user's manner of vibration. Accordingly, input with a headphone that is appropriate to the user's manner of vibration becomes possible.

The input device may further include volume setting means for setting a maximum volume of a sound signal to be input to the headphone on the basis of the vibration detection parameter set by the vibration detection means. With this configuration, an error in detection of vibration of the headphone due to a sound signal input to the headphone can be prevented. Accordingly, an error resulting from a sound signal input to the headphone can be prevented.

The input information determination means may determine information to be input in accordance with a rhythm of vibration detected by the vibration detection means. With this configuration, input of various pieces of information becomes possible, thereby improving the user's convenience.

The headphone may include two speaker units. The input device may further include mode setting means for setting a mode in which one of the two speaker units outputs a sound signal and the other detects sound leaking from an external auditory meatus of a user who wears the headphone. In this case, for example, the one speaker unit is used to output sound such as music while the other speaker unit is used as a microphone, thereby allowing the user to make a call using the headphone. In other words, this configuration can improve the user's convenience.

### Advantageous Effects of Invention

According to the present invention, input with a headphone is implemented using a speaker unit included in a headphone, so that input with a headphone becomes possible using any headphone. In addition, it is readily implemented because it is only necessary to detect an electrical signal output due to vibration.

### Brief Description of Drawings

[Fig. 1] Fig. 1 is a diagram illustrating a functional configuration of an input device according to an embodiment of the present invention.
[Fig. 2] Fig. 2 is a diagram illustrating a circuit for use in tap detection in the embodiment.
[Fig. 3] Fig. 3 is a graph illustrating (i) a signal input to a circuit and (ii) a tap signal output from a differential amplifier in the embodiment.
[Fig. 4] Fig. 4 shows information stored in advance for determining information to be input in the embodiment.
[Fig. 5] Fig. 5 is a flowchart illustrating a process executed during calibration in the input device according to the embodiment of the present invention.
[Fig. 6] Fig. 6 is a flowchart illustrating a process executed during input of information through a user's tap in the input device according to the embodiment of the present invention.

### Description of Embodiments

In the following, an embodiment of an input device according to the present invention will be described in detail in conjunction with drawings. It is noted that in the description of the drawings, the same elements are denoted with the same reference signs, and an overlapping description is omitted.

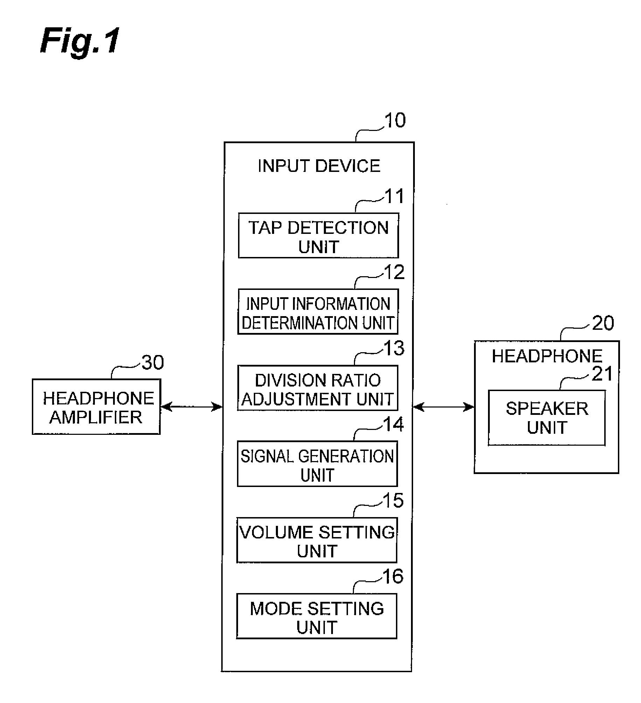

Fig. 1 illustrates an input device 10 according to the present invention. The input device 10 is a device connected to a headphone 20 to make input of information from a user using the headphone 20. The input of information is performed by the user vibrating the headphone 20 in accordance with information the user wants to input. The headphone 20 is vibrated by the user tapping (patting) the headphone 20. Any information may be input. An example of the information includes an input command (for example, play, stop, track select, or any other command) to audio equipment that inputs a sound signal to the headphone 20.

The input device 10 is connected to the headphone 20 by wire such as a cable and is able to input/output a signal. The input device 10 is also connected to a headphone amplifier 30, which is audio equipment (a function thereof) for inputting a sound signal to the headphone 20 through a cable such as wire. The headphone amplifier 30 outputs a sound signal to the headphone 20 through the input device 10. In other words, the input device 10 is provided as an adapter between the headphone 20 and the headphone amplifier 30, for example, and also serves as an output device for outputting a sound signal to the headphone 20. It is noted that connection between the input device 10 and the headphone 20 as well as connection between the input device 10 and the headphone amplifier 30 is not necessarily wired connection but may be wireless connection.

As illustrated in Fig. 1, the headphone 20 includes a speaker unit 21. The speaker unit 21 is a transducer that converts a sound signal input as an electrical signal into a signal to output sound. The headphone 20 is attached to the user's ears so that the user hears sound output from the speaker unit 21. The headphone 20 may include two speaker units 21 for the left and right ears.

In addition to that, the speaker unit 21 also serves as a transducer that converts vibration into an electrical signal. More specifically, when vibration is applied to the headphone 20, the speaker unit 21 outputs an electrical signal in accordance with the vibration. The output electrical signal is input from the headphone 20 to the input device 10. Examples of the speaker unit 21 used may include dynamic-type, balanced armature-type, piezoelectric-type, electrostatic-type, and magnetic-type speaker units (transducers).

A functional configuration of the input device 10 according to the present embodiment will now be described. The input device 10 is configured to include a tap detection unit 11, an input information determination unit 12, a division ratio adjustment unit 13, a signal generation unit 14, a volume setting unit 15, and a mode setting unit 16, as illustrated in Fig. 1.

The tap detection unit 11 is vibration detection means for detecting vibration of the headphone 20 that is caused by the user tapping (patting) the headphone 20 for inputting information. The tap detection unit 11 detects an electrical signal output from the speaker unit 21 of the headphone 20 to detect vibration of the headphone 20 from the detected electrical signal on the basis of a preset vibration detection parameter as described later.

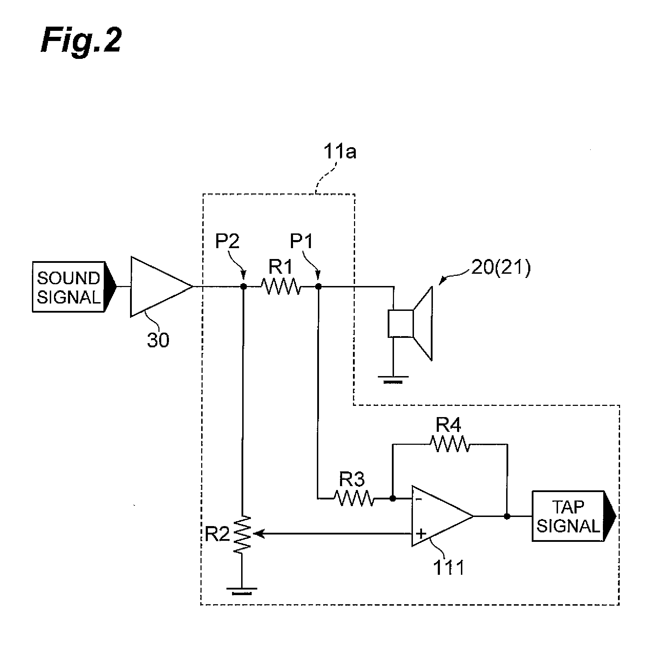

The tap detection unit 11 detects an electrical signal output from the speaker unit 21 using a basic circuit 11 a illustrated in Fig. 2. As illustrated in Fig. 2, the basic circuit 11 a includes four resistors R1 to R4 and a differential amplifier 111. The resistor R1 is provided between the headphone amplifier 30 and the headphone 20 (the speaker unit 21 thereof). Input of a sound signal from the headphone amplifier 30 to the headphone 20 is made through the resistor R1. It is noted that the resistor R1 is often inserted even in a conventional normal manner of connection between a headphone amplifier and a headphone for the purpose of preventing overcurrent and preventing oscillation of the headphone amplifier 30. The tap detection unit 11 detects vibration of the headphone 20 by detecting a potential change of the resistor R1 as an electrical signal output from the speaker unit 21 due to vibration.

When the headphone 20 is tapped, vibration is applied to the speaker unit 21 inside the headphone 20 to generate electric current. Accordingly, the potential at a position P1 on the headphone 20 side of the resistor R1 changes. The tap detection unit 11 inputs the potential at the position P1 to a negative input terminal of the differential amplifier 111 and inputs a potential obtained by appropriately dividing an output potential of the headphone amplifier 30 (potential at a position P2 on the headphone amplifier 30 side of the resistor R1) with the resistor R2, to a positive input terminal of the differential amplifier 111, thereby detecting a potential change of the resistor on the basis of the differentially amplified potential. The potential thus obtained can be such that a sound signal input (played) from the headphone amplifier 30 to the headphone 20 is cancelled and only a potential change associated with a tap is amplified. In the present embodiment, a voltage value output from the differential amplifier 111 is called a tap signal. It is noted that the tap signal includes a signal in a case where tapping is not performed by the user.

Here, the resistor R2 is a variable resistor whose resistance value can be changed by IC control, and the resistance value is set, for example, as described later. The tap signal may be detected using a conventional voltage detector (not shown) included in the tap detection unit 11.

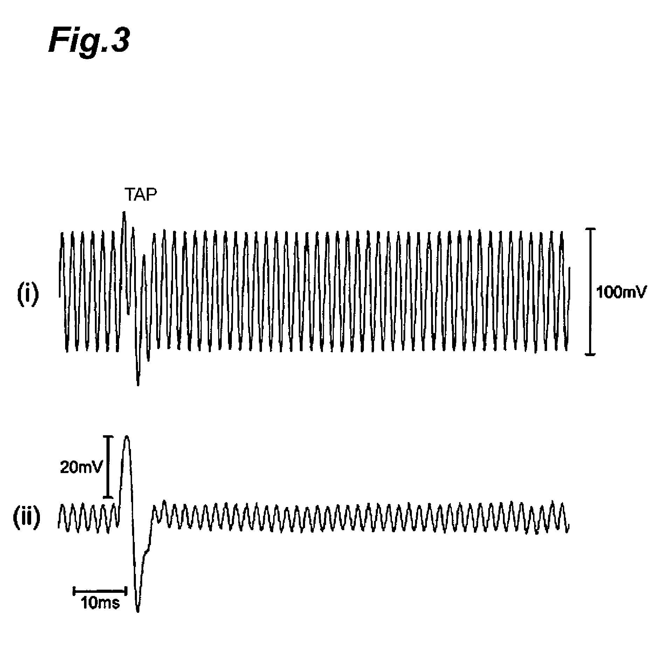

Fig. 3 illustrates a specific example, where (i) represents the potential at the position P1 and (ii) represents a tap signal. The horizontal direction represents an elapse of time, and the vertical direction represents a magnitude of potential. In this example, a sinusoidal wave of 500 Hz and 100 mVp-p is applied to the headphone 20. Here, when the headphone 20 is tapped, a disturbance due to tapping is produced in the potential at the position P1 as illustrated in Fig. 3(i). Here, the tap signal is a signal as illustrated in Fig. 3(ii). In the tap signal, the sinusoidal wave applied to the headphone 20 is attenuated, and a peak associated with the tap is clearly observed. The tap detection unit 11 can detect the peak associated with a tap thereby to detect a tap on the headphone 20.

The peak associated with a tap can be detected using a conventional technique for detecting a waveform peak. Here, a peak may be detected when a voltage value of the tap signal simply exceeds a preset threshold or when it exceeds the threshold and the amount of an immediate preceding change thereof exceeds another threshold. Furthermore, the tap signal output by the differential amplifier 111 may be passed through a low-pass filter or a band-pass filter, and a peak may be detected from the signal passed through the filter. A vibration detection parameter for use to detect a tap (the resultant vibration) is, for example, the threshold of voltage value (peak) of the tap signal as described above, the threshold of the amount of change in voltage value, or a threshold of an interval between peaks. Any vibration detection parameter other than those described above may be used depending on a peak detection method. A signal detection parameter is set appropriately as described later.

The tap detection unit 11 notifies the input information determination unit 12 that vibration (tap) of the headphone 20 is detected, every time it is detected. In the case where two speaker units 21 are included, information indicating which speaker unit 21 the vibration comes from is also output.

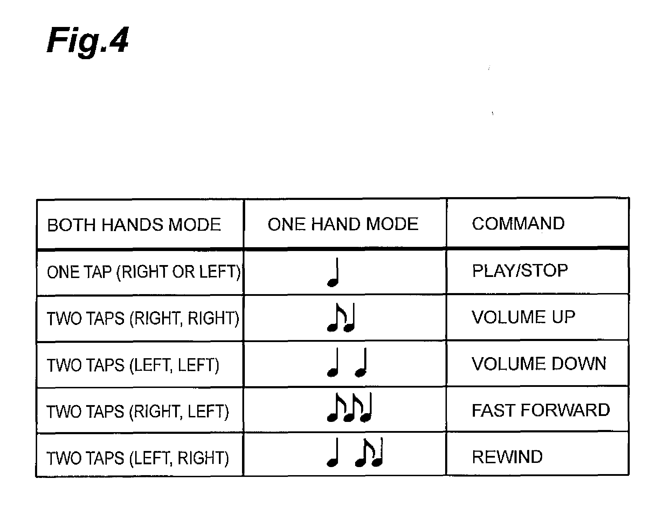

The input information determination unit 12 is input information determination means for determining information to be input in accordance with the vibration detected by the tap detection unit 11. For example, the input information determination unit 12 determines information to be input in accordance with a rhythm of the vibration detected by the tap detection unit 11. Specifically, as shown in the table in Fig. 4, information is stored to indicate the correspondence between a rhythm of vibration and information to be input (for example, a command for operating the headphone amplifier 30), and information to be input is determined on the basis of that information. In Fig. 4, the rhythm of vibration is information in the field "both hands mode" or "one hand mode." The "both hands mode" and "one hand mode" are modes of inputting information by means of vibration of the headphone 20 and are set, for example, by the user before input. The "both hands mode" is a mode of issuing a command by using both hands and tapping the left and right speaker units 21. The "one hand mode" is a mode of issuing a command by using one hand and tapping only the right or left speaker unit 21.

When the notification that vibration of the speaker unit 21 occurs is input from the tap detection unit 11, the input information determination unit 12 determines whether the rhythm of vibration in a certain time range agrees with a rhythm of vibration that is stored in advance in association with an input command. Here, the rhythm of vibration includes the order of vibrations of the two speaker units 21. For example, the order of left and right in the "both hands mode" in Fig. 4 is included. The lengths of individual vibrations that constitute a rhythm of vibration (the difference between a quarter note and an eighth note in the "one hand mode" in Fig. 4) or the interval between vibrations may be taken into consideration.

When it is determined that the rhythm of vibration pertaining to the notification from the tap detection unit 11 agrees with any one of the rhythms of vibration stored in advance, the input information determination unit 12 determines the command stored in association with the stored rhythm of vibration as information to be input. The input information determination unit 12 outputs the information indicating the determined command to a device that uses the information, for example, to the headphone amplifier 30. If it is determined that the rhythm of vibration pertaining to the notification from the tap detection unit 11 does not agree with any of the rhythms of vibration stored in advance, no information is input.

The division ratio adjustment unit 13 is division ratio adjustment means for adjusting a division ratio pertaining to division of the potential at the headphone amplifier 30 side of the resistor R1 in accordance with the connected headphone 20. The signal generation unit 14 is signal generation means for generating a signal for calibration to be input to the headphone 20 from the headphone amplifier 30 side of the resistor R1 through the resistor R1. Although any signal may be used for the signal for calibration, an impulse signal or a sinusoidal signal with variable frequency may be used as described later. The range in which the frequency is changed in the sinusoidal signal may be a range of frequencies of a sound signal such as music output from the headphone amplifier 30. The division ratio adjustment unit 13 and the signal generation unit 14 form a configuration for performing calibration so that vibration can be detected appropriately by the tap detection unit 11.

The calibration is carried out before input of information is made by the user's tap. For example, the calibration is carried out when operation for carrying out calibration is performed on the input device 10 by the user, or when it is newly detected that the headphone 20 is connected to the input device 10.

Specifically, a resistance value of the resistor R2 of the basic circuit 11a is determined by the configuration described above in accordance with the connected headphone 20. The headphone 20 has several parameters including impedance, resonance frequency, and the like, and those parameters vary with the headphone 20. A sound signal superimposed on the tap signal can be reduced by adjusting the resistance value of the resistor R2 in accordance with those parameters.

The signal generation unit 14 is implemented, specifically, with a conventional signal generator and is configured such that a generated (produced) signal is input to the position P2 in the basic circuit 11a. The signal thus generated is input to the headphone 20, and a signal in accordance with the input signal and the parameters of the headphone 20 described above are output from the headphone 20. The signal output from the headphone 20 corresponds to the potential at the position P1 in the basic circuit 11a and is input to the negative input terminal of the differential amplifier 111. Meanwhile, the signal generated (produced) at the position P2 in the basic circuit 11a corresponds to the potential at the position P2 in the basic circuit 11a and is input to the positive input terminal of the differential amplifier 111. Here, if headphone 20 does not vibrate, a tap signal during not vibrating is obtained. The tap signal obtained when the headphone 20 does not vibrate may have the magnitude of amplitude (voltage value) minimized so that vibration can be detected appropriately.

The division ratio adjustment unit 13 detects the tap signal in this case and searches for the resistance value of the resistor R2 such that the detected tap signal (the amplitude thereof) is minimized. This search is conducted, for example, by measuring the amplitude of the tap signal while the resistance value of the resistor R2 is gradually changed. The search may be conducted, for example, on the basis of a sound signal output from the headphone amplifier 30 or may be conducted not necessarily relying on a signal generated from the signal generation unit 14.

If the signal generated from the signal generation unit 14 is an impulse signal or a sinusoidal signal with variable frequency, the division ratio adjustment unit 13 can estimate the parameters of the headphone 20, such as impedance, resonance frequency, and the like, on the basis of the detected tap signal. The division ratio adjustment unit 13 may set the resistance value of the resistor R2 on the basis of the estimated parameters such that the tap signal is minimized. The parameters of the headphone 20 can be estimated using a conventional method. A conventional method can also be used to set the resistance value of the resistor R2 on the basis of the parameters of the headphone 20 such that the tap signal is minimized.

In the method in which the resistance value of the resistor R2 is searched for by inputting a specific signal and gradually changing the resistance value of the resistor R2, the adjustment is only made for the specific signal. By contrast, the method in which the resistance value of the resistor R2 is set on the basis of the parameters of the headphone 20, such as impedance, resonance frequency, and the like, and the method in which the resistance value is searched for by changing the frequency, are different in that the resistance value can be adjusted in a comprehensive point of view. In general, the characteristics of the headphone 20 have frequency-dependence, and the resistance value of the resistor R2 thus varies depending on frequency. For example, in the method in which the resistance value of the resistor R2 is searched for by using a sinusoidal wave of 500 Hz and gradually changing the resistance value of the resistor R2, although an optimum resistance value for a sinusoidal wave of 500 Hz can be found, it is not considered whether the optimum value for a sinusoidal wave of 500 Hz is applicable to other frequencies. Music can be played in the headphone 20 not only at 500 Hz but also at various frequencies.

If unique frequency-dependence exists in the vicinity of 500 Hz, application of the optimum value for 500 Hz to any other frequency is a problem. However, if the frequency is variable, for example, it becomes possible to determine the optimum value at which frequency should be appropriately used.

The signal appearing when the headphone 20 is tapped is strongly affected by the user's tapping operation and, in addition, affected by the parameters of the headphone 20. For example, the resonance frequency of the headphone 20 affects the frequency of the tap signal during tapping.

Then, the tap detection unit 11 may detect a signal generated from the signal generation unit 14, specifically, a response from the headphone 20 to an impulse signal or a sinusoidal signal and then set a vibration detection parameter in accordance with the response, as calibration. Specifically, the tap detection unit 11 detects a tap signal obtained when a signal is generated from the signal generation unit 14 during calibration, as the response. The tap detection unit 11 estimates the parameters of the headphone 20, such as impedance, resonance frequency, and the like, on the basis of the detected tap signal. A vibration detection parameter is set using the parameters. The impedance of the headphone 20 varies with a frequency of a signal and is the smallest at the resonance frequency. Therefore, for example, a threshold of voltage value and a threshold of the amount of change in voltage value of the tap signal, which are vibration detection parameters, are set with reference to the impedance at the resonance frequency. Accordingly, tap detection from a tap signal can be conducted more robustly.

The tap detection unit 11 may allow the user to tap the headphone 20 in advance and may set a vibration detection parameter on the basis of the obtained tap signal rather than using a signal generated from the signal generation unit 14. The tap detection unit 11 detects an electrical signal output from the speaker unit 21 and sets a vibration detection parameter, as calibration. During this calibration, the tap detection unit 11 supposes that the headphone 20 has been tapped by the user and sets a vibration detection parameter. Specifically, a threshold of voltage value of a tap signal is set so that a peak corresponding to a tap can be detected from the tap signal detected during calibration. Here, the user may tap the headphone 20 multiple times in order to set a vibration detection parameter reliably.

For example, the magnitude of peak of a tap signal associated with a tap varies among users because the strength of tap varies among users. Here, without changing the vibration detection parameter, a tap could not be detected from a user who produces a weak peak. By contrast, if the user is allowed to tap in advance, a vibration detection parameter can be set suitable for that user, thereby allowing tap detection even for the user who produces a weak peak.

The volume setting unit 15 is volume setting means for setting the maximum volume of a sound signal input to the headphone 20 on the basis of the vibration detection parameter set by the tap detection unit 11. The volume setting is performed as part of calibration. The sound signal superimposed on the tap signal in Fig. 2 is not nulled even when the resistance value of the resistor R2 is adjusted by the division ratio adjustment unit 13. The reason is that a phase difference occurs because the headphone 20 has a reactance component. Here, in the case where the peak of a tap signal associated with the user's tap is small, when a sound signal at a large volume is input (played), a recognition error occurs in which the tap detection unit 11 detects a tap although no tap is given.

The volume setting unit 15 solves this problem by setting the maximum volume of a sound signal input (played) to the headphone 20 in a range in which a peak detection error does not occur. Specifically, for example, the volume setting unit 15 observes a tap signal obtained when a sinusoidal wave having a specific frequency is applied to the headphone 20 at a certain volume after the resistance value of the resistor R2 is adjusted. This sinusoidal wave is generated, for example, by the signal generation unit 14. The volume setting unit 15 determines how many times this tap signal increases when a tap is determined by the tap detection unit 11. Here, the volume setting unit 15 makes the determination above by referring to the vibration detection parameter set by the tap detection unit 11. Upon determining the multiplication factor, the volume setting unit 15 sets, as the maximum volume, a level of volume obtained by multiplying the certain volume by the multiplication factor. The volume setting unit 15 notifies the headphone amplifier 30 of the set maximum volume to prevent output of a sound signal at a volume exceeding the maximum volume. Alternatively, in the input device 10, when a sound signal exceeding the maximum volume is input from the headphone amplifier 30, the signal may be output to the headphone 20 after being processed so that the volume is equal to or smaller than the maximum volume.

The mode setting unit 16 is mode setting means for setting an operation mode of the input device 10. The setting of a mode is made, for example, in accordance with input operation by accepting input operation through the user's tap as described above. The operation modes include, for example, a "both hands mode" of tapping the headphone 20 using both hands and a "one hand mode" only using one hand as described above. Another mode is an "earphone microphone mode" in which one of two speaker units 21 is used to output (play) a sound signal and the other is used as a microphone. Specifically, the use of the speaker unit 21 as a microphone is, for example, to detect sound leaking from the external auditory meatus of the user wearing headphone 20.

In the "earphone microphone mode," the user hears sound only from one speaker unit 21 of the headphone 20. However, the headphone 20 connected to a telephone allows the user to make a call only by wearing the normal headphone 20. More specifically, even when the user receives a call while listening to the music, the user can take a call only by tapping the headphone 20.

The input device 10 includes a computer (not shown) including hardware such as a CPU (Central Processing Unit) and a memory. The computer performs information processing such as peak detection, determination of information to be input, and determination of a division ratio in the functional means described above. This is how the input device 10 is configured.

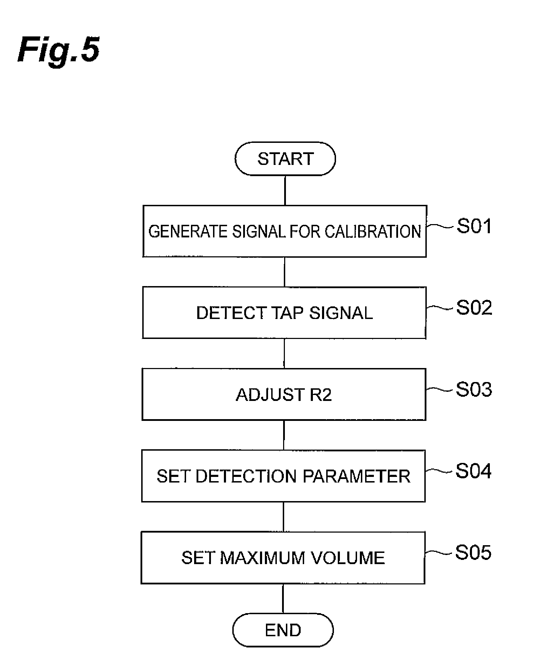

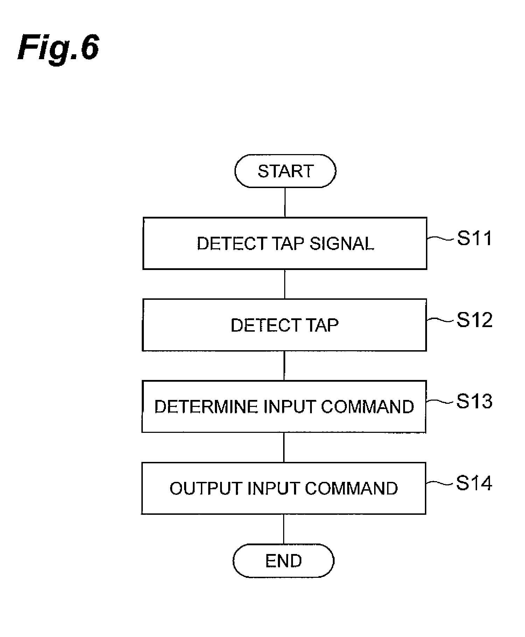

Next, a process (operation of the input device 10) executed in the input device 10 according to the present embodiment will be described using the flowcharts in Fig. 5 and Fig. 6. First, a process executed during calibration will be described using the flowchart in Fig. 5, and then, a process executed during input of information by the user's tap will be described using the flowchart in Fig. 6.

Calibration is carried out when operation for carrying out calibration is performed on the input device 10 by the user or when it is newly detected that the headphone 20 is connected to the input device 10. In the input device 10, first, a signal for calibration is generated by the signal generation unit 14 (S01). This signal is, for example, a sinusoidal wave at a certain volume.

This signal is input to the position P2 in the basic circuit 11a illustrated in Fig. 2. The signal is input to the positive input terminal of the differential amplifier 111 through the resistor R2. Meanwhile, the signal is input to the headphone 20 connected to the input device 10 through the resistor R1. A signal in accordance with the input signal and the parameters of the headphone 20 are output from the headphone 20 to the position P1 in the basic circuit 11a. The signal output from the headphone 20 is input to the negative input terminal of the differential amplifier 111. A tap signal obtained by amplifying the difference between the input two signals is output from the differential amplifier 111 and detected by the division ratio adjustment unit 13 (S02). Here, it is assumed that the headphone 20 is not vibrated (is not tapped).

The resistance value of the resistor R2 is adjusted by the division ratio adjustment unit 13 on the basis of the detected tap signal (S03). Specifically, the resistance value is changed, and a resistance value in which the amplitude of the tap signal is the smallest is searched for. An impulse signal or a sinusoidal signal with variable frequency may be used for adjustment of the resistance value of the resistor R2. The parameters of the headphone 20 may be detected, and the adjustment may be made on the basis of the parameters of the headphone 20. After the resistance value of the resistor R2 is determined, the resistance value of the resistor R2 is controlled to the determined resistance value.

Next, a vibration detection parameter is set by the tap detection unit 11 (S04). Here, the signal for calibration is continuously generated by the signal generation unit 14. To make the setting, the user taps the headphone 20 several times. In the input device 10, before this process, display, sound output, or any other notice may be given to prompt the user to tap. A tap signal at that time is detected by the tap detection unit 11, and a threshold of voltage value or a threshold of amount of change in voltage value of the tap signal may be set as a vibration detection parameter on the basis of the detected tap signal.

Next, the maximum volume of a sound signal input to the headphone 20 is set by the volume setting unit 15 by referring to the vibration detection parameter set by the tap detection unit 11 (S05). This is how the input device 10 carries out calibration. The user can input information by tapping the headphone 20 thereafter.

Next, a process executed during input of information through the user's tap will be described using the flowchart in Fig. 6. In this process, a sound signal may be input (or may not input) from the headphone amplifier 30 to the headphone 20 through the input device 10.

In the present process, a tap signal is detected by the tap detection unit 11 (S11). When the user is tapping the headphone 20, the tap signal is a signal in accordance with the tapping. Then, a tap (a peak corresponding thereto) is detected from the detected tap signal by the tap detection unit 11 using the vibration detection parameter set in S04 (S12). If a tap is detected, the tap detection unit 11 gives a notification thereof to the input information determination unit 12.

Next, information to be input is determined by the input information determination unit 12 in accordance with the vibration detected by the tap detection unit 11 (S13). Specifically, it is determined with which of the rhythms stored in advance as illustrated in Fig. 4 the rhythm of the vibration detected by the tap detection unit 11 agrees in accordance with the setting of the "both hands mode" or the "one hand mode." If it is determined that it agrees with any one of the rhythms, the command stored in association with that rhythm is determined as information to be input. If it is determined that it does not agree with any one of the rhythms, no information is input.

If the input command is determined, the input command is output from the input information determination unit 12 to a prescribed output destination, for example, the headphone amplifier 30 (S14).

As described above, in the input device 10 according to the present embodiment, when the user taps the headphone 20, an electrical signal is generated, and vibration of the headphone 20 is detected by detecting the electrical signal. Then, information to be input is determined in accordance with the detected vibration. In other words, the user vibrates (taps) the headphone 20 whereby information such as an input command can be input to audio equipment connected to the headphone.

As described above, input with the headphone 20 is implemented using the speaker unit 21 included in the headphone 20. Therefore, input with a headphone can be performed using any headphone. Furthermore, it can be readily implemented because it is only necessary to detect an electrical signal output due to vibration. In other words, according to the present embodiment, it is not necessary to provide the headphone with a switch for inputting information, a touch sensor, an acceleration sensor, or input means using any other sensor. However, the input means described above may be provided in order to enable more inputs.

A tap on a headphone can also be detected using a conventional technique that performs full-duplex communication. However, this conventional technique does not aim to detect a tap on a headphone but aims to detect sound leaking from the external auditory meatus. The sound leaking from the external auditory meatus has a signal level much smaller than a tap on a headphone. Therefore, it involves a complicated process considering a phase difference. By contrast, the present invention is targeted only for a tap on a headphone having a signal level much greater than the sound leaking from the external auditory meatus.

Therefore, a tap can be detected only by detecting a potential change of the resistor R1 provided between the headphone 20 and the headphone amplifier 30, more specifically, only with the differential amplifier 111 without considering the phase difference illustrated in Fig. 2, as in the present embodiment described above. This circuit is simple and can be implemented in a small scale and furthermore consumes less power. The big difference between the present invention and the conventional technique lies in that the detected targets are different. The present invention is targeted only for a tap and is therefore simple with low power consumption. In other words, with the configuration as described in the present embodiment, the present invention can be embodied appropriately, reliably, and readily.

With the configuration of detecting the differentially amplified potential as in the present embodiment as described above, the effect of a sound signal input from the headphone amplifier 30 to the headphone 20 can be reduced, and a potential change of the resistor due to vibration can be detected appropriately.

An impulse signal or a sinusoidal signal with variable frequency may be input as illustrated in the present embodiment, so that the division ratio or the vibration detection parameter is adjusted. With this configuration, a potential change of the resistor due to vibration or vibration from the tap signal can be detected more easily in accordance with a headphone. Accordingly, more appropriate input with a headphone becomes possible.

As in the foregoing embodiment, a vibration detection parameter may be set as calibration on the basis of the actual user's tap. With this configuration, a potential change of the resistor due to vibration can be easily detected for every user's manner of vibration. Accordingly, input with a headphone that is appropriate to the individual user's manner of vibration becomes possible. It is noted that all the methods described above may not be used for detection of vibration, and any configuration can be used as long as it can detect an electrical signal output from the speaker unit 21.

As in the foregoing embodiment, the maximum volume to be input to the headphone 20 may be set. This configuration can prevent an error in detection of vibration of the headphone 20 due to a sound signal input to the headphone 20. Accordingly, an error resulting from a sound signal input the headphone can be prevented.

As described above, information to be input may be determined in accordance with the rhythm of vibration (tap). This configuration allows input of various pieces of information and improves the user's convenience. However, the information to be input may not be associated with a rhythm of vibration, and information may be input only with a single vibration.

The mode setting means described above can set a mode in which a sound signal is output from one speaker unit 21 while sound leaking from the user's external auditory meatus is detected from the other speaker unit 21. In this manner, for example, sound such as music is output from one speaker unit while the other speaker unit is used as a microphone, so that the user can make a call using the headphone. In other words, this configuration can improve the user's convenience.

In the foregoing embodiment, the input device 10 is configured separately from the headphone 20 and the headphone amplifier 30 as audio equipment. However, the input device 10 may be configured integrally with the headphone amplifier 30 (as a function of the headphone amplifier 30). Alternatively, the input device 10 may be configured integrally with the headphone 20. In the case where the input device 10 is mounted on the headphone 20, however, the function of the present invention can be used only with that headphone 20.

A method for detecting a tap even more robustly will be described below. In the circuit illustrated in Fig. 2, a sound signal superimposed on a tap signal cannot be nulled no matter how much the resistance value of the resistor R2 is adjusted. The reason is that the phase is shifted because the headphone 20 has a reactance component. If the phase of input from the positive input terminal of the differential amplifier 111 is shifted (or if the phase of input from the negative input terminal is shifted reversely), the sound signal superimposed on the tap signal can be reduced. The amount of phase to be shifted varies with the headphone 20 or the target frequency. In the present invention, it is only necessary to detect a tap, and it is not necessary to strictly match the amount of phase. The frequency of the peak associated with a tap is equal to or lower than 200 Hz. By setting a typical shift amount for such a low frequency and introducing a phase shift circuit into the circuit in Fig. 2, the sound signal superimposed on the tap signal can be reduced more. Accordingly, a signal associated with a tap is observed more clearly, and more robust tap detection becomes possible.

Even more robust tap detection is possible. A filter configured by software can be used to estimate the potential at the position P1 in Fig. 2 from an output value of the headphone amplifier 30. Specifically, in a case where a sound source is a digital signal, an output value of the headphone amplifier 30 can be grasped by monitoring a DA (Digital-Analog) converter. In another manner, an output value of the headphone amplifier 30 can be grasped by directly AD (Analog-Digital) converting the output value of the headphone amplifier 30. The frequency characteristic of the headphone 20 can be known, for example, from an impulse response. On the basis of these, the potential at the position P1 can be estimated.

Furthermore, the potential at the position P1 is observed. The estimated potential is a potential that is not affected by the user's tap, while the observed potential is a potential affected by the user's tap. A signal associated with a tap can be made clearer by comparing those potentials. Thus, robust tap detection becomes possible. In the case of this method, differential amplification of signals is not required, and therefore, the basic circuit 11a illustrated in Fig. 2 is not always necessary.

### Reference Signs List

10... input device, 11... tap detection unit, 11a... basic circuit, R1 to R4... resistor, 111... differential amplifier, 12... input information determination unit, 13... division ratio adjustment unit, 14... signal generation unit, 15... volume setting unit, 16... mode setting unit, 20... headphone, 21... speaker unit, 30... headphone amplifier.

## Claims

1. An input device connectable to a headphone including a speaker unit, the input device comprising:
vibration detection means for detecting an electrical signal output from the speaker unit thereby to detect vibration of the headphone from the detected electrical signal on the basis of a preset vibration detection parameter; and
input information determination means for determining information to be input in accordance with the vibration detected by the vibration detection means.

2. The input device according to claim 1, wherein the vibration detection means includes a resistor provided between a headphone amplifier for outputting a sound signal to the headphone and the headphone, and the vibration detection means detects vibration of the headphone by detecting a potential change of the resistor.

3. The input device according to claim 2, wherein the vibration detection means detects the potential change of the resistor on the basis of a potential obtained by amplifying a difference between a potential obtained by dividing a potential at the headphone amplifier side of the resistor and a potential at the headphone side of the resistor.

4. The input device according to claim 3, wherein the vibration detection means shifts a phase of one of the potential obtained by dividing a potential at the headphone amplifier side of the resistor and the potential at the headphone side of the resistor.

5. The input device according to claim 3 or 4, further comprising division ratio adjustment means for adjusting a division ratio pertaining to division of the potential at the headphone amplifier side in accordance with a headphone connected.

6. The input device according to claim 5, further comprising signal generation means for generating an impulse signal or a sinusoidal signal with variable frequency, the signals being input from the headphone amplifier side of the resistor to the headphone through the resistor, wherein
the division ratio adjustment means detects a response from the headphone to the impulse signal or the sinusoidal signal generated by the signal generation means and adjusts the division ratio in accordance with the response.

7. The input device according to any one of claims 1 to 6, further comprising signal generation means for generating an impulse signal or a sinusoidal signal with variable frequency, the signals being input from the headphone amplifier side of the resistor to the headphone through the resistor, wherein
the vibration detection means detects a response from the headphone to the impulse signal or the sinusoidal signal generated by the signal generation means and sets the vibration detection parameter in accordance with the response.

8. The input device according to any one of claims 1 to 7, wherein the vibration detection means sets the vibration detection parameter by detecting an electrical signal output from the speaker unit, as calibration.

9. The input device according to claim 7 or 8, further comprising volume setting means for setting a maximum volume of a sound signal to be input to the headphone on the basis of the vibration detection parameter set by the vibration detection means.

10. The input device according to any one of claims 1 to 9, wherein the input information determination means determines information to be input in accordance with a rhythm of vibration detected by the vibration detection means.

11. The input device according to any one of claims 1 to 10, wherein the headphone includes two speaker units, and
the input device further comprises mode setting means for setting a mode in which one of the two speaker units outputs a sound signal and the other detects sound leaking from an external auditory meatus of a user who wears the headphone.
